(19) Europäisches Patentamt
European Patent Office
Office européen des brevets

(11) **EP 3 128 215 B1**

(12) **FASCICULE DE BREVET EUROPEEN**

(45) Date de publication et mention
de la délivrance du brevet:
**15.05.2019 Bulletin 2019/20**

(51) Int Cl.:
***F16K 31/42*** *(2006.01)*      ***F16K 11/048*** *(2006.01)*
***F16K 11/07*** *(2006.01)*

(21) Numéro de dépôt: **16179250.2**

(22) Date de dépôt: **13.07.2016**

(54) **VANNE FLUIDIQUE**

**FLÜSSIGKEITSVENTIL**

**FLUID VALVE**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.08.2015 BE 201505489**

(43) Date de publication de la demande:
**08.02.2017 Bulletin 2017/06**

(60) Demande divisionnaire:
**19166788.0
19166793.0
19166795.5**

(73) Titulaire: **Safran Aero Boosters S.A.
4041 Herstal (BE)**

(72) Inventeurs:
• **Frippiat, Cédric
4910 Theux (BE)**
• **Bomal, Jean-Christian
4633 Melen (BE)**
• **Paulus, Nicolas
4000 Liège (BE)**

(74) Mandataire: **Gevers Patents
Intellectual Property House
Holidaystraat 5
1831 Diegem (BE)**

(56) Documents cités:
EP-A1- 2 157 344          WO-A1-83/03455
WO-A1-2014/111096         GB-A- 1 526 630
GB-A- 2 119 481           GB-A- 2 343 935
GB-A- 2 417 546           JP-A- S6 131 783
US-A- 2 526 709           US-A- 4 150 695
US-A- 4 445 528           US-A1- 2010 301 248
US-A1- 2013 312 843

**Description**

**Domaine technique**

L'invention se rapporte à une vanne fluidique proportionnelle, par exemple à trois voies.

**Etat de la technique**

GB1526630 décrit une vanne hydraulique de commutation permettant de dévier un flux d'une entrée vers une première ou une deuxième sortie par le mouvement linéaire d'un membre de vanne. Le membre de vanne étant piloté par un actuateur solénoïde permettant de dévier un flux vers une première sortie lorsqu'il est mis sous tension et vers une deuxième sortie lorsqu'il est mis hors-tension.

US2004/0163721 A1 décrit une vanne fluidique comprenant un actionneur électrique solénoïde. En injectant un courant électrique dans l'actionneur solénoïde, il est possible de déplacer un pilote appelé 'push pin' d'une première position à une deuxième position. Ce pilote, qui n'est pas ferromagnétique dans US2004/0163721A1, est connecté à une armature ferromagnétique. Un membre de vanne mobile est connecté au pilote et permet de contrôler le passage de fluide entre les canaux d'entrée et de sortie de la vanne fluidique. US2004/0163721A1 enseigne notamment au paragraphe [0015] que le membre de vanne est apte à se déplacer d'une manière équivalente au pilote.

La vanne décrite dans US2004/0163721 A1 présente des inconvénients. Pour certaines applications, il est souhaitable que le membre de vanne puisse décrire un grand mouvement ou une grande course. Une grande course du membre de vanne permet une régulation proportionnelle de plus gros débits. En effet, si l'on veut réguler un gros débit sur une petite course, on y perdrait en sensibilité (le même millimètre de course représenterait un delta de débit plus important). De plus, si la course n'est pas suffisante, le membre de vanne pourrait induire (même lorsque la vanne est totalement ouverte) des pertes de charge trop importantes. Or, on cherche généralement à limiter les pertes de charge aux bornes de la vanne et il faut donc que la course soit adaptée au débit qui y passe. Les applications pour lesquelles il vaut mieux adopter de grandes courses sont donc des applications de régulation proportionnelle à haut débit (par exemple à partir de 1500 L/h).

Pour la vanne de US2004/0163721 A1, certaines longues courses peuvent devenir inatteignables. D'autre part, avec ce système connu, plus la course requise du membre de vanne augmente, plus la masse de la vanne fluidique dans son entièreté augmente. Pour avoir des longues courses, il faut en effet prévoir un grand membre de vanne et/ou un grand pilote. Cela augmente le poids de la vanne fluidique. D'autre part, si les éléments mobiles (membre de vanne et pilote) sont grands, il faut alors prévoir en général un solénoïde (ou une bobine) de l'actionneur suffisamment grand pour qu'il soit apte à les déplacer : il faut prévoir un dispositif qui permet de créer une grande force sur le pilote. Il est alors souvent nécessaire de devoir alors injecter un courant électrique suffisamment important dans le solénoïde de manière à générer un champ magnétique suffisamment important pour déplacer les éléments mobiles tel le pilote. Or, pour certaines applications, par exemple aéronautiques, il est désiré d'avoir une vanne de taille et de poids limités et/ou de pouvoir utiliser un courant limité dans le solénoïde.

US4,445,528 divulgue une vanne fluidique selon le préambule de la revendication 1.

**Résumé de l'invention**

Selon un premier aspect, un des buts de la présente invention est de fournir une vanne fluidique proportionnelle à actionneur électrique dont le membre de vanne peut décrire une grande course tout en limitant la masse de la vanne et le courant requis dans l'actionneur électrique.

A cet effet, les inventeurs proposent la vanne fluidique suivante. Vanne fluidique pour un circuit hydraulique d'un équipement d'un aéronef et comprenant :

- un corps de vanne creux comprenant une entrée, deux sorties et une communication vers une pression externe;
- un actionneur électrique solénoïde situé dans le creux du corps de vanne creux et comprenant un pilote mobile ferromagnétique;
- un membre de vanne mobile dans le corps de vanne pour obturer au moins partiellement un passage entre ladite entrée et une des deux sorties, ledit membre de vanne définissant au moins partiellement une première et une deuxième cavités situées de part et d'autre dudit membre de vanne dans le creux du corps de vanne,
- une restriction fixe au niveau de (ou dans) ladite communication de sorte qu'un déplacement dudit pilote mobile induise une variation de pression dans une desdites première et deuxième cavités pour créer une force de déplacement sur ledit membre de vanne pour faire varier une débit de fluide entre l'entrée et les deux sorties ; caractérisée en ce qu'au moins une portion dudit membre de vanne comprend un matériau ferromagnétique et en ce que ledit actionneur électrique solénoïde (40) est apte à exercer une force magnétique de déplacement sur ladite portion ferromagnétique du membre de vanne.

La communication permet donc de connecter de manière fluidique une partie du creux de corps de vanne avec une cavité externe à la vanne comprenant un fluide ayant une pression externe (ou de référence).

Le pilote agit donc comme une restriction variable en fonction de sa position.

Avec la vanne fluidique de l'invention, un déplacement du pilote induit une différence de pression entre les première et deuxième cavités. Cette différence de pression donne naissance à une force de déplacement sur le membre de vanne. Si cette force est suffisante, elle permet de déplacer le membre de vanne. Comme cela est illustré dans la suite, il est possible d'obtenir un grand déplacement du membre de vanne, même si le pilote de déplace peu et/ou si la force exercée sur lui est faible. Cela est possible notamment grâce à l'existence des première et deuxième cavités définies au moins partiellement par le membre de vanne, à la communication du corps de vanne creux vers une pression externe et à la présence de la restriction fixe. Un déplacement du pilote, même petit et induit par une faible force, peut créer une différence de pression entre ces deux cavités qui est suffisante pour déplacer le membre de vanne selon une course importante. Ainsi, le pilote ne doit pas décrire un grand déplacement pour avoir une grande course du membre de vanne et il n'est pas nécessaire d'appliquer une grande force sur le pilote. La taille du pilote peut donc être réduite ce qui permet d'avoir une vanne fluidique de poids limité. Le pilote étant de taille réduite, il n'est pas nécessaire de prévoir un actionneur électrique très puissant. On peut donc réduire sa taille (et donc son poids), de même que le courant qui y est injecté pour déplacer le pilote. Finalement, la vanne fluidique selon l'invention permet d'avoir un membre de vanne décrivant une grande course tout en limitant le poids de la vanne fluidique et le courant requis dans l'actionneur électrique.

Avec la vanne fluidique de l'invention, il est possible d'avoir de grands déplacements (ou de grandes courses) du membre de vanne, même si le pilote décrit un petit déplacement. La vanne fluidique selon l'invention peut donc être vue comme une vanne d'amplification. Généralement, à partir de 4 mm de course du membre de vanne, un homme du métier parle de grande course. La masse de la vanne de l'invention peut être inférieure à 2 kg. De préférence, elle peut descendre à 1.5 kg, voire à 1 kg.

Avec la vanne fluidique de l'invention, un déplacement du membre de vanne n'est pas nécessairement identique au déplacement du pilote qui induit le déplacement du membre de vanne. Pour la vanne fluidique de l'invention, le pilote et le membre de vanne ne sont pas connectés mécaniquement en général. Pour certains modes de réalisation, le pilote et le membre de vanne ne sont jamais en contact.

L'actionneur électrique de la vanne fluidique selon l'invention ne nécessite pas un grand courant d'alimentation, même si l'on désire que le membre de vanne décrive de grandes courses. Par exemple, pour un actionneur électrique de type solénoïde, on peut utiliser un courant de 0 à 100 mA sur un bus 16-29 VDC, de préférence de type EEC-FADEC. Une faible puissance électrique peut donc suffire pour déplacer le membre de vanne selon une longue course. La vanne fluidique de l'invention n'est pas du type 'Direct Drive'. Les termes 'entrée' et 'sorties' du corps de vanne creux pourraient être inter changés. Cela n'est en effet fonction que du sens d'écoulement du fluide dont le débit est contrôlé par la vanne de l'invention. Ainsi, le corps de vanne pourrait contenir deux entrées et une sortie. De même, le corps de vanne pourrait comprend plus qu'une entrée et plus que deux sorties.

On entend par force de déplacement une force qui a un sens et une direction selon une direction de déplacement possible du membre de vanne mobile. Le pilote est parfois appelé plongeur par un homme du métier. La communication est apte à mettre en communication le creux du corps de vanne creux avec un pression de référence. Le terme 'restriction fixe' est connu d'un homme du métier. Différents types de restriction fixe peuvent être envisagés. Un exemple non limitatif est un orifice circulaire percé dans une paroi dont l'épaisseur est du même ordre de grandeur que son diamètre. D'autres exemples sont un coude, un rétrécissement de diamètre.

La vanne fluidique de l'invention présente d'autres avantages. Elle peut être moins chère que d'autres solutions existantes. Elle présente aussi de bonnes performances. Généralement, les vannes amplifiées hydrauliquement existantes (type servovalves) ne peuvent pas s'appliquer à de grandes courses. Si l'on fait passer un gros débit à travers une servovalve existante, ses performances seront affectées (perte de résolution, pertes de charge augmentées). Avec la vanne de l'invention, on peut obtenir une amplification tout en ayant de bonnes performances (résolution, précision, répétabilité). Ainsi, avec la vanne de l'invention, il est possible d'avoir les caractéristiques suivantes : précision en boucle ouverte de 10% sur la position du membre de vanne, résolution de 5 % sur la position du membre de vanne, répétabilité de 2 % sur la position du membre de vanne. La vanne selon l'invention est en outre particulièrement simple et ne nécessite pas d'éléments de forme compliquée. Le principe d'amplification du mouvement du membre de vanne peut être important. L'interface de l'actionneur peut être une commande de type signal ordinateur (EEC-FADEC par exemple). La vanne fluidique selon l'invention peut être utilisée dans de nombreuses applications : dans un moteur d'un aéronef par exemple mais pas seulement.

La vanne fluidique de l'invention est une vanne proportionnelle, terme connu de l'homme du métier. En conséquence, on arrive à contrôler le passage entre l'entrée et chacune des deux sorties sur toute la plage de course du membre de vanne. La vanne de l'invention n'est donc pas simplement une vanne ON-OFF. Avec la vanne de l'invention, il y a une infinité de positions stables pour le membre de vanne : elle permet donc un réel contrôle du débit de fluide entre l'entrée et les deux sorties, (cela est possible par un réel contrôle de la pression dans la première et/ou deuxième cavité). L'actionneur électrique de la vanne fluidique de l'invention peut être qualifié d'immergé, contrairement à la vanne de US2,526,709. Ainsi, si la vanne fluidique de l'invention permet de contrôler un débit d'huile, l'actionneur électrique est immergé dans de l'huile quand la vanne fluidique est en fonctionnement.

Selon une variante possible, le corps de vanne comprend deux communications, chacune d'entre elles étant apte à connecter de manière fluidique le creux du corps de vanne avec une pression externe , et la vanne fluidique comprend une restriction fixe dans (ou au niveau de) chaque communication de sorte qu'un déplacement dudit pilote mobile induise une variation de pression dans chacune desdites première et deuxième cavités pour créer une force de déplacement sur ledit membre de vanne pour faire varier une débit de fluide entre l'entrée et les deux sorties.

Comme communication permet donc de relier de manière fluidique le creux du corps de vanne à une cavité externe comprenant un fluide qui a une pression donnée. Chaque communication peut relier le creux à une même pression externe ou à deux pressions externes différentes.

Avec de mode de réalisation préféré, le contrôle du mouvement du membre de vanne est encore meilleur et l'amplification de la force agissant dessus peut être plus grande.

Selon une autre variante préférée, le creux du corps de vanne comprend une cavité comprenant :

- ledit l'actionneur électrique solénoïde et
- une communication vers une pression de référence,
  pour permettre d'avoir une pression constante au niveau dudit pilote mobile quelle que soit sa position.

Cela correspond à une version équilibrée de la vanne fluidique.

Selon un autre mode de réalisation possible, la communication débouche sur la première cavité. De préférence, la deuxième cavité est reliée à une pression avale. La restriction fixe peut comprendre un passage (ou communication ou jeu d'usinage) entre le pilote et une paroi cylindrique l'entourant. Une telle paroi cylindrique est une paroi interne du corps de vanne là où est situé l'actionneur électrique solénoïde.

Avec la vanne fluidique de l'invention, au moins une portion du membre de vanne comprend un matériau ferromagnétique et l'actionneur électrique solénoïde est apte à exercer une force magnétique de déplacement sur ladite portion ferromagnétique du membre de vanne. Dans ce cas-là, l'actionneur électrique solénoïde peut être qualifié d'actionneur à deux pilotes ou deux plongeurs. Quand un courant électrique circule dans le solénoïde, les deux pilotes se rapprochent pour diminuer la réluctance et donc l'énergie magnétique. Mais suite à ce déplacement apparaît des différences de pression entre les première et deuxième cavités qui permettent de déplacer le membre de vanne dans un sens opposé en général, permettant in fine d'avoir un déplacement du membre de vanne important.

De préférence, la vanne fluidique de l'invention comprend un ressort et une extrémité du membre de vanne est reliée audit corps de vanne par l'intermédiaire dudit ressort.

De préférence, ladite pression externe est une haute pression.

Le pilote peut être connecté à un ressort.

Selon un mode de réalisation possible, le pilote est percé d'un trou longitudinal. Avec ce mode de réalisation préféré, il est possible d'avoir une pression dans une desdites première et deuxième cavités qui est uniquement définie par la force délivrée par l'actionneur solénoïde. Ainsi, cette pression est indépendante de la pression de référence qui est en général une haute pression.

Selon un mode de réalisation possible, ledit membre de vanne est percé d'un trou longitudinal qui permet de mettre en communication lesdites première et deuxième cavités lorsqu'il n'est pas obturé. Alors, ledit pilote est de préférence configuré de sorte qu'il est apte à obturer ledit trou longitudinal du membre de vanne. Dans ce cas, ledit pilote est de préférence situé dans ladite première cavité et ladite communication est apte à permettre une communication entre ladite première cavité et ladite pression externe (ou pression de référence) qui est alors de préférence une haute pression. De préférence, la deuxième cavité est alors en communication avec une basse pression.

De préférence, ladite communication vers ladite pression externe comprend un filtre. Cela permet de répondre à un besoin de fluide propre.

De préférence, le pilote a une symétrie de révolution.

La vanne fluidique selon l'invention permet de répartir un débit de fluidique entre deux voies (par exemple deux sorties) de manière proportionnelle, c'est-à-dire 50%-50%, grâce à un signal de commande de faible puissance qui peut être envoyé par un ordinateur. La vanne fluidique de l'invention peut être utilisée avec différents fluides comme par exemple : de l'huile, de l'huile moteur, du carburant. La vanne fluidique de l'invention pourrait être utilisée avec d'autres fluides. De préférence, la vanne fluidique de l'invention comprend un ou plusieurs filtres ou dispositifs anti-pollution (joints, chemins de fuite par exemple) pour diminuer les risques de blocage du membre de vanne. La vanne fluidique de l'invention peut être utilisée dans un circuit hydraulique d'un équipement d'un aéronef comme par exemple : circuit hydraulique d'un train d'atterrissage.

Les inventeurs proposent également un circuit hydraulique d'un équipement d'un aéronef (par exemple circuit hydraulique d'un train d'atterrissage), un système de pile à combustible, une turbomachine et un aéronef comprenant une ou plusieurs vannes fluidiques selon l'invention.

**Brève description des figures**

Ces aspects ainsi que d'autres aspects de l'invention seront clarifiés dans la description détaillée de modes de réalisation particuliers de l'invention, référence étant faite aux dessins des figures, dans lesquelles:

- les Fig.1 à 8 ne correspondent pas à l'invention revendiquée ;
- la Fig.9 montre un mode de réalisation de la vanne fluidique de l'invention ;
- la Fig.10 montre un autre mode de réalisation de ladite vanne fluidique.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

**Description détaillée de certains modes de réalisation de l'invention**

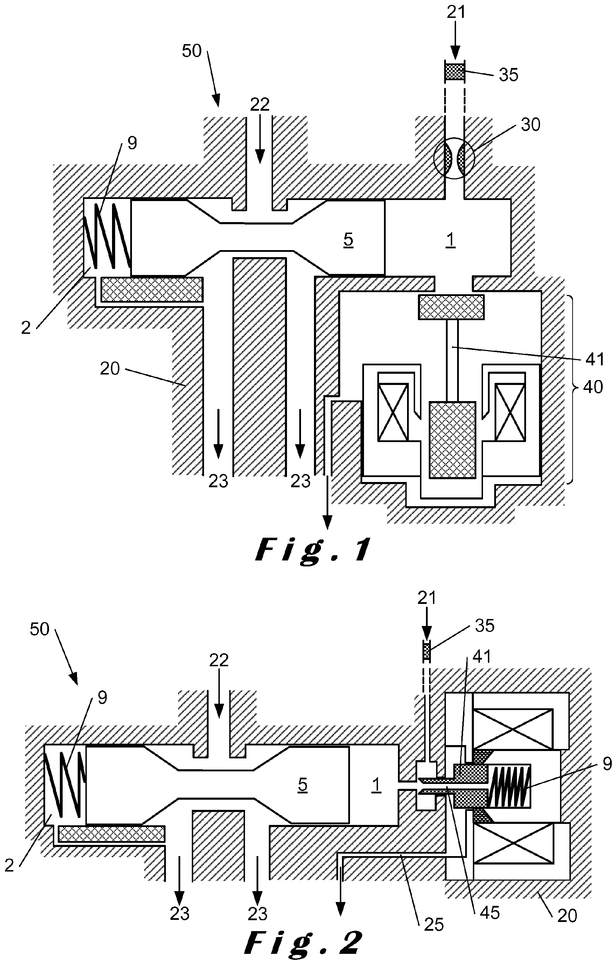

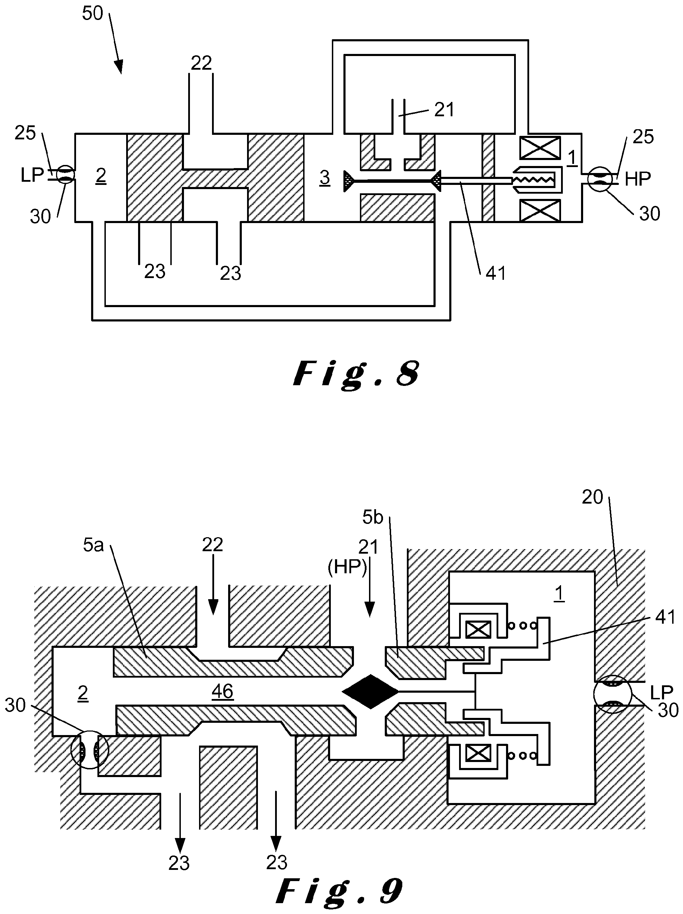

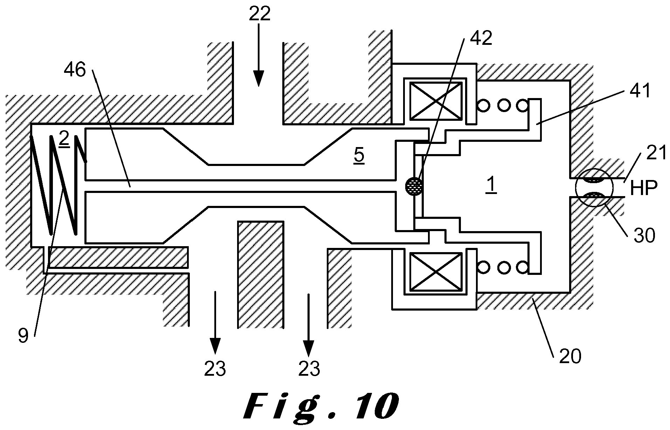

Les figures 1 à 8 n'appartiennent pas à l'invention revendiquée. Des modes de réalisation de l'invention sont illustrés en figures 9 et 10.

La figure 1 montre un exemple de mode de réalisation de la vanne fluidique 50. Elle comprend un corps de vanne 20 creux et trois voies : une entrée 22 et deux sorties 23. De préférence, la sortie 23 de gauche est une sortie de by-pass, terme connu d'un homme du métier. De préférence, la sortie 23 de droite est une sortie moteur. Le membre de vanne 5 ou tiroir est mobile dans le corps de vanne 20 creux. La forme du membre de vanne 5 par rapport au creux du corps de vanne 20 creux est telle qu'une variation de la position du membre de vanne 5 permet de varier un débit de fluide entre l'entrée 22 et une ou les deux sorties 23. Comme cela est montré à la figure 1, une extrémité du membre de vanne 5 est de préférence connectée ou reliée au corps de vanne 20 par l'intermédiaire d'un ressort 9. Le membre de vanne 5 définit une première cavité 1 à sa droite et une deuxième cavité 2 à sa gauche, au niveau du ressort 9. La deuxième cavité 2 est de préférence mise à la pression avale comme montré à la figure 1. La pression de la première cavité 1 est réglée via une communication 21 vers une pression de référence (ou pression externe) qui est ici une haute pression et via une communication vers une cavité comprenant l'actionneur électrique 40 qui elle-même comprend une sortie de by-pass. La communication 21 vers la pression externe comprend une restriction 30.

La vanne fluidique 50 comprend aussi un actionneur électrique solénoïde 40 comprenant une bobine et un pilote 41 mobile ferromagnétique. En injectant un courant électrique dans la bobine de l'actionneur électrique 40, le pilote 41 ferromagnétique se déplace en général pour diminuer la réluctance (terme connu d'un homme du métier) ou de manière équivalente l'énergie magnétique globale.

Pour l'exemple de la figure 1, lorsqu'un courant électrique s'écoule dans la bobine de l'actionneur solénoïde, le pilote 41 se déplace vers le haut, diminuant la communication entre la première cavité 1 et la sortie de by-pass (configuration montrée à la figure 1). La pression dans la première cavité 1 augmente alors car le pilote 41 empêche l'équilibrage de pression entre la première cavité 1 et la sortie de bypass. La pression de la deuxième cavité 2 étant la même que la pression de la sortie de bypass, il apparaît une différence de pression entre les première 1 et deuxième 2 cavités. Cela induit une force de déplacement vers la gauche sur le membre de vanne 5. Si cette force de déplacement est suffisamment importante, le membre de vanne 5 se déplace vers la gauche. Si la haute pression ou pression externe via la communication 21 diminue, la force exercée par l'actionneur 41 reste constante car elle ne dépend que du courant circulant dans sa bobine. La restriction 30 se resserrera alors pour maintenir la pression dans la première cavité.

La figure 2 montre un autre mode de réalisation de la vanne fluidique 50. Comme cela est illustré sur cette figure, la vanne fluidique 50 comprend de préférence un filtre 35 en amont de la communication 21 pour répondre à un besoin d'huile propre. En effet, le fluide de pression de référence, par exemple une haute pression, peut être de l'huile moteur par exemple comprenant beaucoup de particules qui pourraient se coincer dans les restrictions. Il est important de filtrer ces particules qui pourraient encrasser la vanne fluidique 50.

La deuxième cavité 2 a en général une basse pression mentionnée par LP dans la suite. La cavité 1 a en général une moyenne pression mentionnée par MP dans la suite. La pression de référence en amont de la communication 21 a en général une haute pression mentionnée par HP dans la suite. La pression importante pour le fonctionnement de la vanne fluidique 50 de l'invention est la pression MP de la première cavité 1 ou cavité d'amplification. La différence entre MP et LP définit la force de déplacement qui peut s'exercer sur le membre de vanne 5 mobile. Ce dernier est connecté à un ressort.

Dans le mode de réalisation de la figure 2, le pilote 41 de l'actionneur solénoïde 40 est relié à un ressort 9 qui plaque le pilote 41 contre son siège à gauche en l'absence de force magnétique exercée par la bobine de l'actionneur solénoïde 40. Quand le pilote 41 est dans cette position, la pression MP de la première cavité 1 est égale à la pression de sortie de vanne par fuite dans les jeux d'usinage et vu le trou longitudinal 45 dans le pilote 41. Les jeux d'usinage (ou passage entre le pilote 41 et une paroi cylindrique l'entourant) constituent la restriction fixe 30.

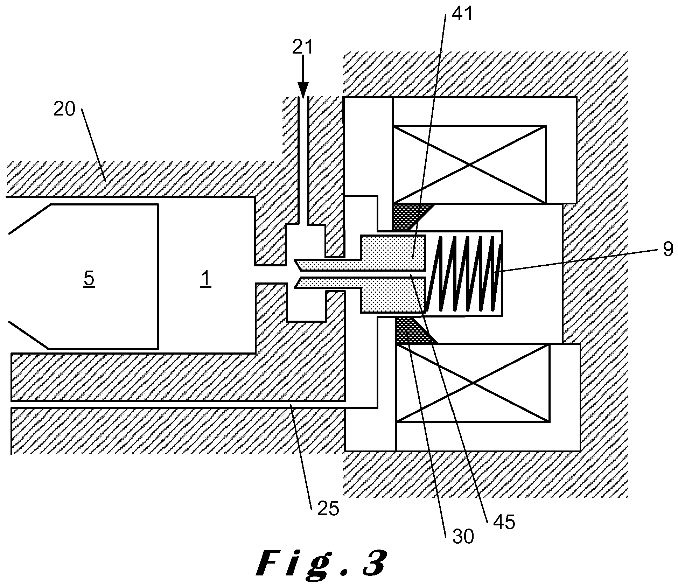

Lorsque l'actionneur solénoïde 40 impose une force sur le pilote 41, elle est telle qu'elle l'attire vers la droite. Un fluide (par exemple de l'huile) à une pression HP pénètre alors dans le trou longitudinal 45 du pilote 41 pour atteindre une cavité où se trouve le ressort 9 relié au pilote 41. Lorsque la pression MP devient assez grande, elle va venir refermer le pilote 41 contre son siège car une partie du pilote 41 est soumis à la pression de sortie LP qui est plus faible (voir figure 3 par exemple). Au final, la pression dans la première cavité 1 et dans la cavité du ressort 9 du pilote 41 sont égales vu le trou longitudinal 45 du pilote 41. La pression de la deuxième cavité 2, LP, est égale à la pression de sortie de vanne qui est inférieure. Finalement une force de déplacement vers la gauche s'applique sur le membre de vanne 5.

En référence à la figure 3, les différentes forces qui s'exercent sur le pilote 41 sont :

- la force du ressort 9 s'appliquant sur le pilote 41. Dans l'exemple des figures 2 et 3, cette force s'applique vers la gauche (ressort 9 en compression). Cela permet de repousser le pilote 41 contre son siège quand il n'y a pas de courant dans la bobine de l'actionneur solénoïde 40 et pas d'augmentation de pression dans la cavité comprenant le ressort 9. Le ressort 9 connecté au pilote 41 n'est pas nécessaire puisque la pression hydraulique qui est toujours présente poussera toujours le pilote 41 vers la gauche. Si un ressort 9 est connecté au pilote 41 comme cela est montré aux figures 2 et 3, on choisira de préférence un ressort 9 avec une constante de raideur modérée car la force magnétique exercée par la bobine de l'actionneur solénoïde 41 sur le pilote 41 ferromagnétique doit pouvoir vaincre la force exercée par le ressort 9.
- La force magnétique générée sur le pilote 41 ferromagnétique par la bobine de l'actionneur solénoïde 40, dirigée vers la droite.
- Les efforts de pression. Concernant la pression de référence HP, elle s'applique sur tout le contour du pilote 41 qui a une forme cylindrique. Les efforts s'annulent donc entre eux.

Si l'on considère que les efforts dirigés vers la droite sont négatifs et ceux vers la gauche positifs, on obtient alors :

$$-MP*S_1 - LP*(S_2-S_1) + MP*S_2 = (MP-LP)*(S_2-S_1)$$

La surface S1 (respectivement S2) est la surface verticale de l'extrémité gauche (respectivement droite) du pilote 41. Puisque $S_2$ est supérieure à $S_1$ et que MP est plus grand que LP, les efforts de pression tendent à être positifs et donc à être dirigées vers la gauche (tendent à fermer le pilote 41).

Finalement, le pilote 41 est en équilibre lorsque la force magnétique égale la somme entre les efforts de pression et l'effort du ressort 9 (qui est en en général négligeable pour les raisons invoquées plus haut). On obtient:

$$(MP-LP)*(S2-S1) + Fressort = Fmagnétique$$

(MP-LP) et (S2-S1) étant en général constants.

On remarque alors que la pression MP est uniquement définie par la force délivrée par le solénoïde et ceci indépendamment de la pression HP (mais pas de LP). Cependant, LP peut offrir davantage de constance que HP car directement liée à un réservoir, par exemple.

Le ressort 9 connecté au pilote 41 n'est pas nécessaire. En l'absence d'un tel ressort 9, il convient de prévoir une butée (amagnétique de préférence) à droite du pilote 41 afin qu'il y ait toujours une pression hydraulique à droite de lui qui peut le repousser à refermer la restriction vers la première cavité 1.

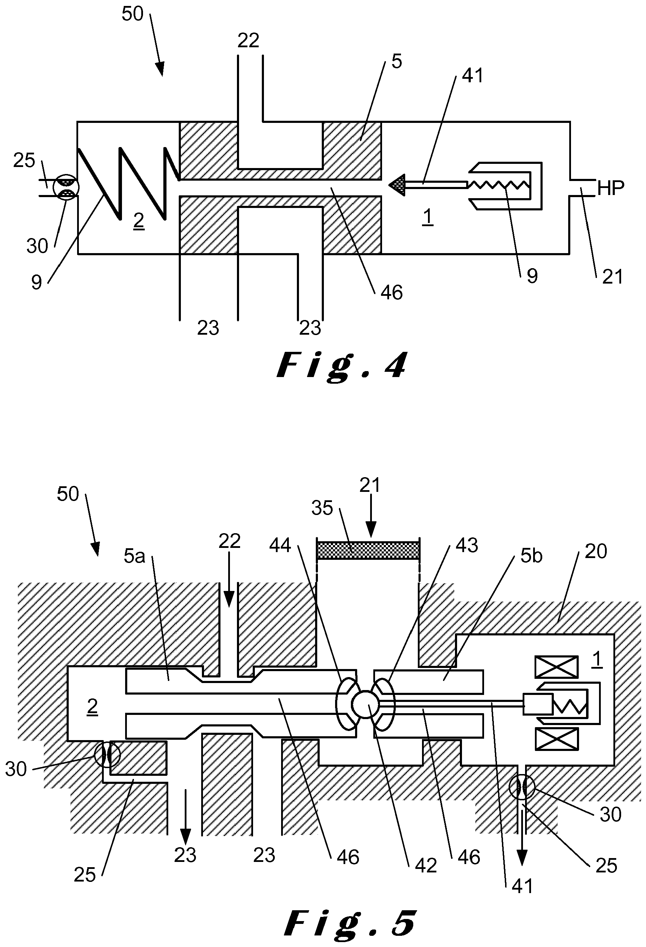

La figure 4 montre un autre mode de réalisation possible de la vanne fluidique 50. Comme les autres modes de réalisation, le concept de base est la modulation de la pression d'une cavité au travers d'une restriction fixe (30) et une restriction variable (induite par le pilote 41). Le membre de vanne 5 mobile est toujours repoussé vers le pilote 41 grâce à l'action d'un ressort 9 connecté au membre de vanne 5. Cela engendre une répartition des pressions hydraulique de sorte que le membre de vanne 5 ne touche pas le pilote 41 et reste toujours légèrement sur sa gauche. Lorsque le courant dans la bobine de l'actionneur électrique solénoïde 40 augmente, le pilote 41 va se mouvoir vers la gauche, créant une chute de pression dans la deuxième cavité 2 qui contient le ressort 9 (la deuxième cavité 2 est reliée à une pression externe via la communication 25 qui comprend une restriction fixe 30). Le pilote 41 est en effet apte à obturer au moins partiellement le trou longitudinal 46 du membre de vanne 5 qui peut mettre en communication première 1 et deuxième 2 cavités. Le mouvement du pilote 41 vers la gauche induit donc un mouvement aussi vers la gauche du membre de vanne 5. Le mouvement du pilote 41 vers la gauche peut aussi induire une augmentation de pression dans la première cavité 1 ayant aussi pour effet de déplacer le membre de vanne 5 vers la gauche.

Un avantage du mode de réalisation de la figure 4 est que si HP augmente soudainement, la restriction variable du trou longitudinal 46 du membre de vanne 5 va s'ouvrir, ce qui va également augmenter la pression dans la deuxième cavité 2, et qui compensera la variation de pression HP de sorte que le membre de vanne 5 ne s'en retrouve pas trop affecté.

La figure 5 montre un autre mode de réalisation possible de la vanne fluidique 50. Comme cela est montré à la figure 5, le membre de vanne 5 mobile n'est pas relié à un ressort 9 pour ce mode de réalisation. De préférence, la communication 21 vers une pression de référence ou pression externe (haute pression par exemple) comprend un filtre 35. Comme on peut le voir sur la figure, le corps de vanne 20 comprend ici deux communications 25 vers une pression externe (ici vers une même pression avale). Chacune de ces deux communications 25 comprend une restriction fixe 30.

Dans le mode de réalisation de la figure 5, le pilote 41 comprend un élément 42 ayant la forme d'une bille ou protubérance ronde. Le membre de vanne 5 comprend deux parties (5a, 5b) couplées mécaniquement. Chacune des deux parties (5a, 5b) est percée d'un trou longitudinal 46 pour mettre en communication première 1 et deuxième 2 cavités lorsque les trous longitudinaux 46 ne sont pas obturés. L'élément 42 du pilote 41 est apte à obturer au moins partiellement le trou longitudinal 46 d'une ou des deux parties (5a, 5b) du membre de vanne 5 (restriction variable). Quand l'actionneur électrique 40 est activé, le pilote 41 se déplace vers la gauche (ressort couplé au pilote 41 en traction dans cet exemple). La section 44 de la partie 5a gauche du membre de vanne 5 est alors au moins partiellement obturée, tandis que la section 43 de la partie 5b de droite l'est moins. La perte de charge au travers de la section 44 est donc plus importante qu'au travers de la section 43. La pression dans la première cavité 1 augmente vu la configuration de la communication 21 alors que celle de la deuxième cavité 2 diminue. Les deux parties (5a, 5b) du membre de vanne 5 se déplacent donc vers la gauche.

Le membre de vanne 5 atteint son équilibre lorsque le pilote 41 atteint la position imposée par la force de l'actionneur électrique 40. Dans ce cas, on a équilibre de pression entre les deux cavités (1, 2). Ce mode de réalisation a l'avantage d'être indépendant des variations de pression d'amplification et d'alimentation puisqu'il répartit la pression HP amenée via la communication 21 dans les première 1 et deuxième 2 cavités. L'avantage de ce mode de réalisation est sa vitesse de réaction : transition rapide.

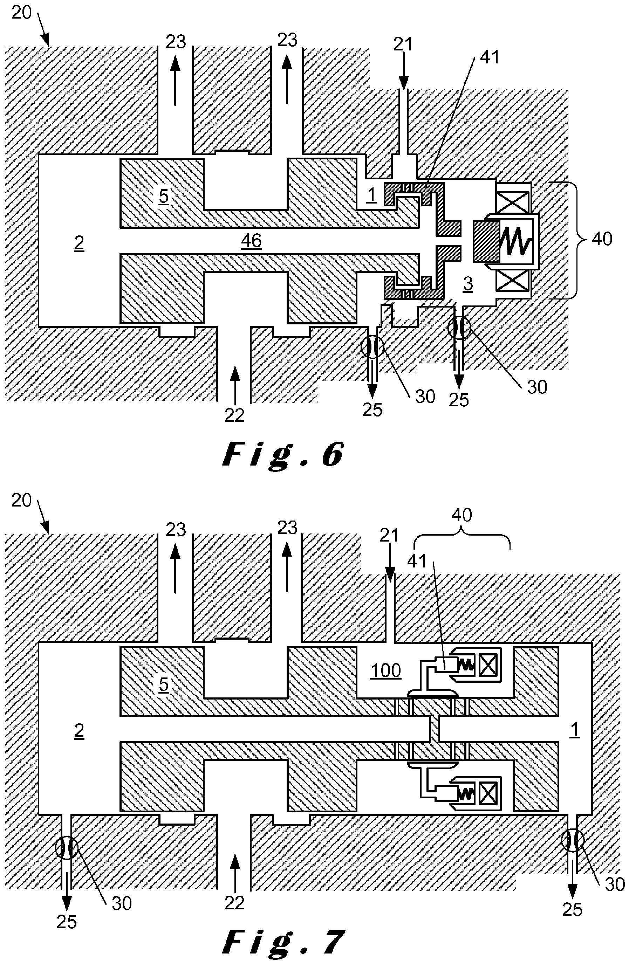

La figure 6 montre une version plus stable que la précédente. Ici, la première cavité 1 comprend une partie du pilote 41 mobile, tandis qu'il existe de part et d'autre du membre de vanne 5 une deuxième 2 et troisième 3 cavités qui sont tout le temps à la même pression par l'intermédiaire d'un trou longitudinal 46 dans le membre de vanne 5 et une partie du pilote 41. Quand un courant est injecté dans l'actionneur électrique solénoïde 40, le pilote 41 bouge vers la droite (ressort du pilote en compression ici). La pression dans la première cavité 1 diminue et ainsi p(cavité 2)-p(cavité 1) devient positif entraînant un mouvement vers la droite du membre de vanne 5. Ce déséquilibre de pression exerce sur le pilote 41 une force vers la gauche. Le système est donc stable car la différence de pression prenant naissance par le mouvement du pilote 41 le ralentit, le stabilise. Comme cela est illustré à la figure 6, les première 1 et deuxième 2 cavités sont reliées vers une pression externe (basse pression par exemple) via deux communications 25, chacune comprenant une restriction fixe 30.

La figure 7 montre une version équilibrée de la vanne fluidique 50. Le creux du corps de vanne 20 comprend une cavité 100 comprenant l'actionneur 40 et une communication 21 (sans restriction fixe 30) vers une pression de référence (par exemple une haute pression). L'actionneur 40 est donc soumis à une pression constante égale à cette pression de référence, indépendamment de sa position. Le système est dit équilibré. Comme cela est illustré à la figure 7, les première 1 et deuxième 2 cavités sont reliées vers une pression externe (basse pression par exemple) via deux communications 25, chacune comprenant une restriction fixe 30.

La figure 8 montre une autre version particulièrement stable de la vanne fluidique 50. Ici, le membre de vanne 5 comprend trois parties couplées mécaniquement (zones hachurées). La pression de référence amenée par la communication 21 dans le creux du corps de vanne 20 est de préférence une haute pression HP. La première cavité est reliée à une haute pression via une communication 25 comprenant une restriction fixe 30. Quand l'actionneur électrique 40 est activé, le pilote 41 se déplace vers la gauche. Cela va augmenter la pression dans la troisième cavité 3 où se trouve l'extrémité gauche (ou protubérance gauche) du pilote 41. Dans le même temps, la pression dans la cavité située entre la troisième cavité 3 et la première cavité 1 et où se trouve la protubérance droite du pilote 41 diminue ou reste constante car cette cavité est en communication avec LP par l'intermédiaire de la deuxième cavité 2 qui elle-même est reliée à une pression externe LP via une communication 25 qui comprend une restriction fixe 30. Au final, la force hydraulique s'appliquant sur le pilote 41 est dirigée vers la droite, c'est-à-dire dans un sens opposé à son déplacement induit par la bobine de l'actionneur solénoïde 40. Cela augmente la stabilité de la vanne fluidique 50.

La figure 9 montre un autre mode de réalisation de la vanne fluidique 50. Le membre de vanne 5 comprend deux parties (5a, 5b). Ce mode de réalisation se rapproche de celui montré à la figure 5. Une différence réside dans le fait que l'actionneur électrique solénoïde 40 est apte ici à exercer une force magnétique de déplacement sur le membre de vanne 5 car la partie de droite 5b comprend un matériau ferromagnétique et une portion de la partie de droite 5b se situe dans les lignes de champs magnétiques générées par le solénoïde de l'actionneur lorsque ce dernier est activé. Quand il est activé, le pilote 41 qui comprend aussi un matériau ferromagnétique et la partie de droite 5b du membre de vanne 5 se rapproche pour diminuer l'énergie magnétique globale. Cela a pour effet de plus obturer le trou longitudinal 46 de la partie gauche 5a que celui de la partie de droite, induisant un mouvement vers la gauche du membre de vanne 5. La pression de référence amenée par la communication 21 est de préférence un haute pression HP. L'actionneur électrique 40 de la vanne fluidique de la figure 9 pourrait être qualifié d'actionneur électrique 40 biplongeur ou bipilote par la présence du pilote 41 et de la partie 5b qui peuvent bouger suite à la présence d'un courant dans la bobine de l'actionneur solénoïode 40.

La figure 10 montre un autre mode de réalisation de la vanne fluidique 50 où le membre de vanne 5 comprend par contre un trou longitudinal 46 qui peut être obturé au moins partiellement par un élément 42 du pilote 41, ayant la forme d'une bille à la figure 10. Le membre de vanne 5 est connecté au corps de vanne 2 creux par l'intermédiaire d'un ressort 9. Ce ressort 9 se trouve dans une deuxième cavité 2 reliée à une sortie 23 par l'intermédiaire d'un canal. Une première cavité 1 comprenant l'actionneur solénoïde 40 peut être connectée à une source de pression de référence, par exemple une haute pression HP, par l'intermédiaire d'une communication 21 qui comprend une restriction fixe 30.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne fluidique (50) proportionnelle pour un circuit hydraulique d'un équipement d'un aéronef et comprenant :

   - un corps de vanne (20) creux comprenant une entrée (22), deux sorties (23) et une communication (21 ; 25) vers une pression externe;
   - un actionneur électrique solénoïde (40) situé dans le creux du corps de vanne (20) creux et comprenant un pilote (41) mobile ferromagnétique;
   - un membre de vanne (5) mobile et apte à décrire une course dans le corps de vanne (20) pour obturer au moins partiellement un passage entre ladite entrée (22) et une des deux sorties (23), ledit membre de vanne (5) définissant au moins partiellement une première (1) et une deuxième (2) cavités situées de part et d'autre dudit membre de vanne (5) dans le creux du corps de vanne (20), et étant configuré pour contrôler ledit passage entre ladite entrée (22) et chacune desdites deux sorties (23) sur toute la plage de ladite course dudit membre de vanne (5) ;
   - une restriction fixe (30) dans ladite communication (21 ; 25) de sorte qu'un déplacement dudit pilote (41) mobile induise une variation de pression dans une desdites première (1) et deuxième (2) cavités pour créer une force de déplacement sur ledit membre de vanne (5) pour faire varier un débit de fluide entre l'entrée (22) et les deux sorties (23) ;

   **caractérisée en ce qu'**au moins une portion dudit membre de vanne (5) comprend un matériau ferromagnétique et **en ce que** ledit actionneur électrique solénoïde (40) est apte à exercer une force magnétique de déplacement sur ladite portion ferromagnétique du membre de vanne (5).

2. Vanne fluidique (50) selon la revendication précédente **caractérisée en ce que** ledit membre de vanne (5) est percé d'un trou longitudinal (46) pour mettre en communication lesdites première (1) et deuxième (2) cavités lorsqu'il n'est pas obturé et **en ce que** ledit pilote (41) est apte à obturer ledit trou longitudinal (46) du membre de vanne (5).

3. Vanne fluidique (50) selon l'une quelconque des revendications précédentes **caractérisée en ce que** :

   - ledit corps de vanne (20) comprend deux communications (21 ;25), chacune d'entre elles étant apte à connecter de manière fluidique le creux du corps de vanne (20) avec une pression externe, et **en ce que**
   - ladite vanne fluidique (50) comprend une restriction fixe (30) dans chaque communication (21 ;25) de sorte qu'un déplacement dudit pilote (41) mobile induise une variation de pression dans chacune desdites première (1) et deuxième (2) cavités pour créer une force de déplacement sur ledit membre de vanne (5) pour faire varier une débit de fluide entre l'entrée (22) et les deux sorties (23).

4. Vanne fluidique (50) selon l'une quelconque des revendications 1 à 2 ou selon la revendication 3 **caractérisée en ce que** le creux du corps de vanne (20) creux comprend une cavité (100) comprenant :

- ledit l'actionneur électrique solénoïde (40) et
- une communication vers une pression de référence,

pour permettre d'avoir une pression constante au niveau dudit pilote (41) mobile quelle que soit sa position.

5. Vanne fluidique (50) selon l'une quelconque des revendications précédentes où ladite restriction fixe (30) comprend un passage entre le pilote (41) et une paroi cylindrique l'entourant.

6. Vanne fluidique (50) selon l'une quelconque des revendications précédentes **caractérisée en ce qu'**elle comprend un ressort (9) et **en ce qu'**une extrémité dudit membre de vanne (5) est reliée audit corps de vanne (20) par l'intermédiaire dudit ressort (9).

7. Vanne fluidique (50) selon l'une quelconque des revendications précédentes **caractérisée en ce que** ledit pilote (41) est connecté à un ressort (9).

8. Circuit hydraulique d'un équipement d'un aéronef comprenant une vanne fluidique (50) selon l'une quelconque des revendications précédentes

9. Système de pile à combustible comprenant une vanne fluidique (50) selon l'une quelconque des revendications 1 à 7.

10. Turbomachine d'aéronef comprenant une vanne fluidique (50) selon l'une quelconque des revendications 1 à 7.

11. Aéronef comportant une vanne fluidique (50) selon l'une quelconque des revendications 1 à 7.


**Patentansprüche**

1. Fluidisches Absperrorgan (50), das für einen Hydraulikkreislauf einer Flugzeugausstattung proportional ist und umfasst:

- einen hohlen Absperrorgankörper (20), umfassend einen Eingang (22), zwei Ausgänge (23) und eine Kommunikation (21; 25) zu einem äußeren Druck;
- einen elektrischen solenoiden Aktuator (40), der sich in der Aushöhlung des hohlen Absperrorgankörpers (20) befindet und eine bewegliche ferromagnetische Vorsteuerung (41) umfasst;
- ein bewegliches Absperrorganglied (5), das imstande ist, einen Hub im Absperrorgankörper (20) zu beschreiben, um zumindest teilweise einen Durchgang zwischen dem Eingang (22) und einem der zwei Ausgänge (23) zu verschließen, wobei das Absperrorganglied (5) zumindest teilweise einen ersten (1) und einen zweiten (2) Hohlraum definiert, die sich beiderseits des Absperrorganglieds (5) in der Aushöhlung des Absperrorgankörpers (20) befinden, und konfiguriert ist, um den Durchgang zwischen dem Eingang (22) und jedem der zwei Ausgänge (23) über den ganzen Hubbereich des Absperrorganglieds (5) zu überwachen;
- eine feste Drosselung (30) in der Kommunikation (21; 25), sodass eine Bewegung der beweglichen Vorsteuerung (41) eine Druckänderung in einem des ersten (1) und zweiten (2) Hohlraums hervorruft, um eine Bewegungskraft auf das Absperrorganglied (5) zu erzeugen, um einen Fluiddurchflussstrom zwischen dem Eingang (22) und den zwei Ausgängen (23) zu ändern;

**dadurch gekennzeichnet, dass** zumindest ein Abschnitt des Absperrorganglieds (5) ein ferromagnetisches Material umfasst und dadurch, dass der elektrische solenoide Aktuator (40) imstande ist, eine magnetische Bewegungskraft auf den ferromagnetischen Abschnitt des Absperrorganglieds (5) auszuüben.

2. Fluidisches Absperrorgan (50) nach dem vorstehenden Anspruch, **dadurch gekennzeichnet, dass** das Absperrorganglied (5) durch ein Längsloch (46) durchbohrt wird, um den ersten (1) und zweiten (2) Hohlraum in Kommunikation zu bringen, wenn es nicht verschlossen ist, und dadurch, dass die Vorsteuerung (41) imstande ist, das Längsloch (46) des Absperrorganglieds (5) zu verschließen.

3. Fluidisches Absperrorgan (50) nach einem der vorstehenden Ansprüche, **dadurch gekennzeichnet, dass**:

- der Absperrorgankörper (20) zwei Kommunikationen (21; 25) umfasst, von denen jede imstande ist, die Aushöhlung des Absperrorgankörpers (20) mit einem äußeren Druck fluidisch zu verbinden, und dadurch, dass
- das fluidische Absperrorgan (50) eine feste Drosselung (30) in jeder Kommunikation (21; 25) umfasst, sodass eine Bewegung der beweglichen Vorsteuerung (41) eine Druckänderung in jedem des ersten (1) und zweiten (2) Hohlraums hervorruft, um eine Bewegungskraft auf das Absperrorganglied (5) zu erzeugen, um einen Fluiddurchflussstrom zwischen dem Eingang (22) und den zwei Ausgängen (23) zu ändern.

4. Fluidisches Absperrorgan (50) nach einem der Ansprüche 1 bis 2 oder nach Anspruch 3, **dadurch gekennzeichnet, dass** die Aushöhlung des hohlen Absperrorgankörpers (20) einen Hohlraum (100) umfasst, der umfasst:

   - den elektrischen solenoiden Aktuator (40) und
   - eine Kommunikation zu einem Referenzdruck,

   um es zu ermöglichen, einen konstanten Druck hinsichtlich der beweglichen Vorsteuerung (41), unabhängig von seiner Position, aufzuweisen.

5. Fluidisches Absperrorgan (50) nach einem der vorstehenden Ansprüche, wo die feste Drosselung (30) einen Durchgang zwischen der Vorsteuerung (41) und einer zylindrischen Wand, die sie umgibt, umfasst.

6. Fluidisches Absperrorgan (50) nach einem der vorstehenden Ansprüche, **dadurch gekennzeichnet, dass** es eine Feder (9) umfasst und dadurch, dass ein Ende des Absperrorganglieds (5) mit dem Absperrorgankörper (20) mittels der Feder (9) verknüpft ist.

7. Fluidisches Absperrorgan (50) nach einem der vorstehenden Ansprüche, **dadurch gekennzeichnet, dass** die Vorsteuerung (41) mit einer Feder (9) verbunden ist.

8. Hydraulikkreislauf einer Flugzeugausstattung, umfassend ein fluidisches Absperrorgan (50) nach einem der vorstehenden Ansprüche.

9. Brennstoffzellensystem, umfassend ein fluidisches Absperrorgan (50) nach einem der Ansprüche 1 bis 7.

10. Flugzeug-Turbostrahltriebwerk, umfassend ein fluidisches Absperrorgan (50) nach einem der Ansprüche 1 bis 7.

11. Flugzeug, einschließend ein fluidisches Absperrorgan (50) nach einem der Ansprüche 1 bis 7.

**Claims**

1. Proportional fluid valve (50) for a hydraulic circuit of an aircraft equipment and comprising:

   - a hollow valve body (20) comprising an inlet (22), two outlets (23) and a communication channel (21; 25) with an external pressure source;
   - an electric solenoid actuator (40) located in the cavity of the hollow valve body (20) and comprising a ferromagnetic movable pilot (41);
   - a valve member (5) movable inside the valve body (20) for closing at least partially a passage between said inlet (22) and one of the two outlets (23), said valve member (5) defining at least partially a first (1) and a second (2) cavity located on either side of said valve member (5) in the cavity of the valve body (20), and being configured to control said passage between said inlet (22) and each one of said two outlets (23) over the entire stroke range of said valve member (5);
   - a fixed restriction (30) in said communication channel (21; 25) such that a displacement of said movable pilot (41) induces a variation in pressure in one of said first (1) and second (2) cavities to create a displacement force on said valve member (5) to vary a flow rate of fluid between the inlet (22) and the two outlets (23);

   **characterised in that** at least one portion of said valve member (5) comprises a ferromagnetic material and **in that** said electric solenoid actuator (40) is capable of exerting a magnetic displacement force on said ferromagnetic portion of the valve member (5).

2. Fluid valve (50) according to the preceding claim **characterised in that** said valve member (5) is perforated with a longitudinal hole (46) to establish communication between said first (1) and second (2) cavities when it is not blocked and **in that** said pilot (41) is capable of blocking said longitudinal hole (46) of the valve member (5).

3. Fluid valve (50) according to any of the preceding claims **characterised in that**:

   - said valve body (20) comprises two communication channels (21; 25), with each one of them capable of fluidically connecting the cavity of the valve body (20) with an external pressure source, and **in that**
   - said fluid valve (50) comprises a fixed restriction (30) in each communication channel (21; 25) such that a displacement of said movable pilot (41) induces a variation in pressure in each one of said first (1) and second (2) cavities to create a displacement force on said valve member (5) to vary a flow rate of fluid between the inlet (22) and the two outlets (23).

4. Fluid valve (50) according to any of claims 1 to 2 or according to claim 3 **characterised in that** the cavity of the hollow valve body (20) comprises a cavity (100) comprising:

   - said electric solenoid actuator (40) and
   - a communication channel with a reference pressure,

   to enable a constant pressure to be generated on said movable pilot (41), regardless of its position.

5. Fluid valve (50) according to any of the preceding claims wherein said fixed restriction (30) comprises a passage between the pilot (41) and a cylindrical wall surrounding it.

6. Fluid valve (50) according to any of the preceding claims **characterised in that** it comprises a spring (9) and **in that** an end of said valve member (5) is connected to said valve body (20) via said spring (9).

7. Fluid valve (50) according to any of the preceding claims **characterised in that** said pilot (41) is connected to a spring (9).

8. Hydraulic circuit of an aircraft equipment comprising a fluid valve (50) according to any of the preceding claims.

9. Fuel cell system comprising a fluid valve (50) according to any of claims 1 to 7.

10. Aircraft turbine engine comprising a fluid valve (50) according to any of claims 1 to 7.

11. Aircraft comprising a fluid valve (50) according to any of claims 1 to 7.

**Fig. 1**

**Fig. 2**

**F i g . 3**

**Fig.4**

**Fig.5**

**Fig. 6**

**Fig. 7**

*Fig. 8*

*Fig. 9*

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1526630 A
- US 20040163721 A1
- US 4445528 A
- US 2526709 A